# EUROPEAN PATENT SPECIFICATION

(11) **EP 3 465 268 B1**
(45) Date of publication and mention of the grant of the patent: **11.01.2023**
(21) Application number: 16903898.1
(22) Date of filing: 31.05.2016
(51) Int. Cl.: G01S 7/481, G01S 17/08, G01S 17/10, G01S 7/486, G01S 17/88, G01S 7/487, G01F 23/284

(54) **LOOP POWERED DISTANCE TRANSMITTER**
SCHLEIFENGESPEISTER ABSTANDSSENDER
ÉMETTEUR DE DISTANCE À ALIMENTATION EN BOUCLE

(43) Date of publication of application: 10.04.2019
(73) Proprietor: ABB Schweiz AG, 5400 Baden (CH)
(72) Inventor: LAPLANTE, Sylvio, Quebec G26 2V8 (CA); GILBERT, Patrick, Ste-Brigitte de Laval Quebec G0A 3KO (CA); COUTURE, Patrick, Quebec G3B 2K9 (CA); MARCEAU, Vincent, Quebec G1X 3W6 (CA); MIMEAULT, Yvan, Quebec G1V 3C7 (CA)
(74) Representative: Maiwald GmbH
(86) International application number: PCT/IB2016/001210
(87) International publication number: WO 2017/208045

(56) References cited:
- DE-A1- 2 813 591
- US-A- 5 727 110
- US-A1- 2004 124 854
- US-A1- 2004 124 854
- US-A1- 2005 146 705
- US-A1- 2011 026 015
- US-A1- 2011 085 576
- US-A1- 2012 194 798
- US-A1- 2012 299 767
- US-A1- 2015 177 369
- US-A1- 2015 177 369

## Description

### BACKGROUND

The present disclosure relates generally to industrial process control systems, and more particularly, to a transmitter for sensing the distance of process material.

Industrial process control systems commonly use a wiring system known as a loop powered circuit. One type of loop powered circuit that is widely used is a two wire 4-20 mA current loop. In a two wire 4-20 mA system, the circuit is used for the dual functions of powering devices on the circuit and transmitting communication signals between devices on the circuit. That is, sensors and/or transducers draw power from the circuit in order to operate, and communication signals are also transmitted over the circuit between the sensors and/or transducers and a monitor or controller. Thus, a loop powered device is distinguished from conventional electronic devices in that data is transmitted over the same lines that also power the device.

One advantage of a 4-20 mA loop system is that the circuit can extend over long distances without the communication signal degrading. The reason for this is that the communication signal is based on the electrical current level in the wires instead of the voltage level. Unlike voltage which drops over longer distances, the current level stays the same. Thus, in a conventional 4-20 mA system, a current of 4 mA could be identified as a "0" or "off" and a current of 20 mA could be identified as a "1" or "maximum". In an analog mode, current levels between 4 mA and 20 mA can represent any proportional numerical value between "off" and "maximum." Alternatively, an analog-to-digital converter could be used to generate signal increments which can represent proportional or other numerical values. Additionally, current levels outside of the 4 mA and 20 mA range can be used to activate an alarm (e.g., the Namur NE43 recommendation).

However, one disadvantage of loop powered circuits is that the sensors and/or transducers must operate with a very low power draw from the loop circuit. Because the sensors and/or transducers are not independently powered, but instead draw power from the circuit, the sensors and/or transducers must be able to operate on the low current and voltage typically supplied by the loop circuit. For example, in a typical 4-20 mA circuit with a 24 V power supply, the current at a sensor can be as low as 3 mA and the voltage can be as low as 10 V. Thus, the power available for the sensor to operate is only 30 mW. Thus, it can be particularly challenging to develop high performance devices for loop powered systems due to the power constraints that a device is subject to.

US 2011/026015 A1 concerns a method and system for determining a level of a substance in a container. The method comprises emitting one pulse from a light source in a field of illumination toward a surface of said substance in said container. A backscatter signal of said pulse is detected by an optical detector. A lidar trace is created from said backscatter signal, said lidar trace including at least one reflection peak. A surface reflection is identified among said at least one reflection peak in said lidar trace, said surface reflection being a reflection of said pulse from said surface. The surface reflection is signal-fitted to provide a fitted surface trace. A level of said substance is determined in said container using said fitted surface trace.

US 2004/124854 A1 concerns a loop powered level measurement and time of flight ranging system with power management. The level measurement system comprises a controller, a transducer for distance ranging, a power supply, and a power management stage. The power management stage comprises a shunt current regulator and a circuit for charging a storage capacitor. The shunt current regulator shunts excess current from the current loop and the circuit charges the storage capacitor.

US 2015/177369 A1 concerns a receiver unit including at least one single photon avalanche detector element of a Geiger mode and a time-to-digital converter circuit. Each single photon avalanche detector element is enabled to detect a photon in at least one time-gated window, and each single photon avalanche detector element is configured to output an electric pulse in response to detection of a photon of optical radiation within the at least one time-gated window. The time-to-digital converter circuit provides timing data associated with said electric pulse for determination of a distance of a target on the basis of the timing data provided by the time-to-digital converter circuit.

US 5 727 110 A1 concerns a remotely powered field instrument which comprises a housing with an electronics compartment, a terminal compartment, and a bulkhead separating the electronics compartment from the terminal compartment. A first electrical lead extends through the bulkhead. A mounting plate is secured within the terminal compartment. An interface module is positioned within the terminal compartment and secured to the mounting plate. The interface module comprises an optical connector, an optical-to-electrical converter coupled to the optical connector and a second electrical lead coupled between the optical-to-electrical converter and the first electrical lead.

### SUMMARY

The present invention concerns a distance transmitter according to claim 1. Further aspects of the present invention are defined in the dependent claims. A distance transmitter for loop powered circuits is described. The loop powered distance transmitter may be used to overcome power constraints and flange opening constraints of conventional distance transmitters. The distance transmitter preferably operates on a two wire 4-20 mA loop circuit. The distance transmitter draws power from the loop circuit to power the electrical components of the sensor. The sensor includes a laser emitter and a light detector. The laser emitter outputs pulses of laser light that contact a target and are reflected back to the sensor. The light detector receives at least some of the reflected light. The sensor determines the time that the laser pulses take to travel between the laser emitter/light detector and the target and determines the distance of the target using the travel time. The sensor may also be provided with a lens body with a lens for the light detector and a lens for the laser emitter. The lens for the laser emitter may be located within the circumference of the lens for the light detector and may be an interruption of the light detector lens. In this specifications a non-SI unit is used, namely inch (with symbol "), which may be converted to the respective SI or metric unit according to the following conversion: 1" = 0.0254 m.

### BRIEF DESCRIPTION OF SEVERAL VIEWS OF THE DRAWINGS

The invention may be more fully understood by reading the following description in conjunction with the drawings, in which:
Figure 1 is a perspective view of a loop powered distance transmitter;
Figure 2 is a block diagram of a loop powered system for a distance transmitter;
Figure 3 is a chart of analog and digital signals for a reflected laser pulse;
Figure 4 is a chart of an analog laser pulse and a digital reconstruction of the laser pulse;
Figure 5 is a chart of analog laser pulses with different magnitudes and digital reconstructions of the laser pulses;
Figure 6 is a schematic view of a flange;
Figure 7 is a schematic view of a light detector and a laser emitter in a side-by-side arrangement;
Figure 8 is a schematic view of the light detector and the laser emitter in an angular arrangement;
Figure 9 is a schematic view of the light detector and the laser emitter in an overlapping arrangement;
Figure 10 is a perspective cross-sectional view of a sensor for the distance transmitter;
Figure 11 is a cross-sectional view of the sensor;
Figure 12 is an end perspective view of the sensor, showing circuit boards; and
Figure 13 is a side perspective view of a lens body for the sensor.

### DETAILED DESCRIPTION

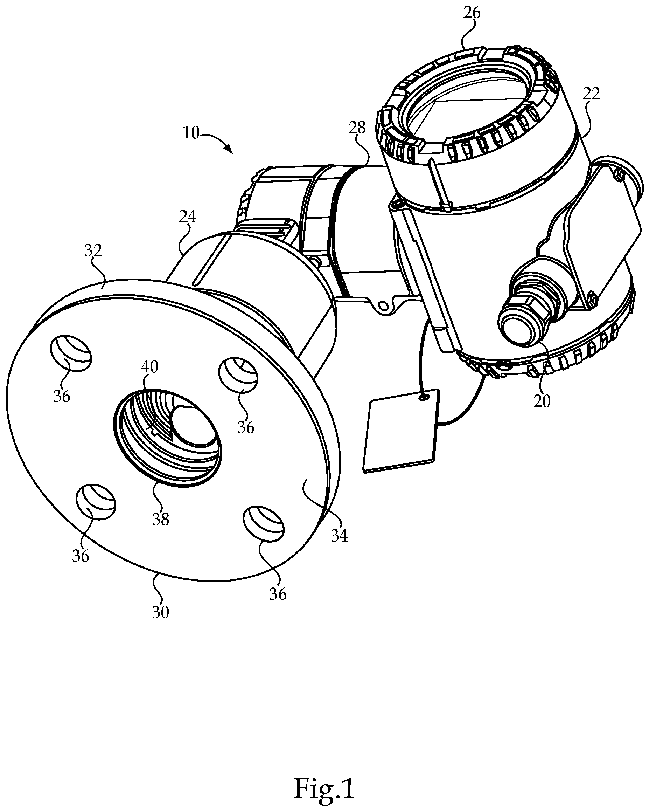

Referring now to the figures, and particularly Figure 1, a distance transmitter 10 is shown for loop powered systems. The distance transmitter 10 is particularly well-suited for two wire 4-20 mA current loops 12. Preferably, the distance transmitter 10 is provided with an input 20 for the two wires 14 of a 4-20 mA current loop 12. The transmitter 10 may be provided with a first housing 22 that houses the electronics for interfacing with the loop powered circuit 12 and a second housing 24 that houses the sensor 40 components. A display and control interface 26 may also be provided on the first housing 22 for monitoring the status of the transmitter 10 and changing settings of the transmitter 10. A line bushing 28 may also be provided between the first and second housings 22, 24. The line bushing 28 allows electrical cables to extend between the first and second housings 22, 24 but seals the air cavities of the two housings 22, 24 from each other. This can be important for applications where flammable gases may be present to minimize the volume of the air cavities and isolate the respective electrical components to reduce the risk of combustion.

The second housing 24 is provided with a flange 30 for attaching the transmitter 10 to an industrial facility, such as a silo, tank or other type of structure for storing or moving various materials. Preferably, the flange 30 is provided with standard dimensions that allow the transmitter 10 to be readily mounted to conventional mounting interfaces used in industrial facilities. For example, a 2" standard industrial flange 30 is desirable because of the common usage of 2" flanges 30 in industrial facilities and their affordability. One example is a 2" nominal pipe size (NPS) flange 30, although other standard industrial flanges are also used. The flange 30 is typically provided with a round circumference 32 and a flat mounting surface 34. The flange 30 may also be provided with four mounting holes 36 for attaching the flange 30 to a structure with bolts, although other mounting arrangements are also used. At the center of the flange 30, an opening 38 is provided, which in the case of a 2" NPS flange 30 is a standard 2" opening 38. The sensor 40, which is described further below, is mounted within the second housing 24 and senses the distance of material through the central opening 38 in the flange 30. It is understood that the sensed distance may refer to a single or multiple solid objects or may refer to a level of fluid or loose process materials. If desired, a user may enter a conversion factor into the transmitter 10 to convert the distance determined by the sensor 40 to a level in a container, a volume of material, etc. Thus, the distance (or level) signal that is output by the transmitter 10 may be a converted distance.

In general, the transmitter 10 senses the distance of material by emitting laser pulses out of the central opening 38 and detecting light through the central opening 38 that is reflected back from the material. However, a high performance distance transmitter 10 as described suffers from several constraints. For example, as described, the transmitter 10 must operate with limited power consumption due to the limited voltage and current available at the transmitter 10. Also, the size of the central opening 38 limits the cross-sectional area available for outputting the laser pulses and receiving the reflected light. These two constraints combined limit the overall performance available in a distance transmitter 10. That is, if power consumption was not a constraint on the transmitter 10, increased power could be supplied to the sensor 40 to obtain high performance even with a limit on the size of the central opening 38. Conversely, if the size of the central opening 38 was increased, more light could be received through the central opening 38 for improved performance even without an increase in power being provided. Although some loop powered devices have sought to overcome these constraints by providing various types of energy storage on the device, such as capacitors or batteries, power constraints remain a limiting factor in the performance of existing distance transmitters. Thus, improvements are desirable for providing a high performance distance transmitter 10 in industrial process control systems using a loop powered circuit 12.

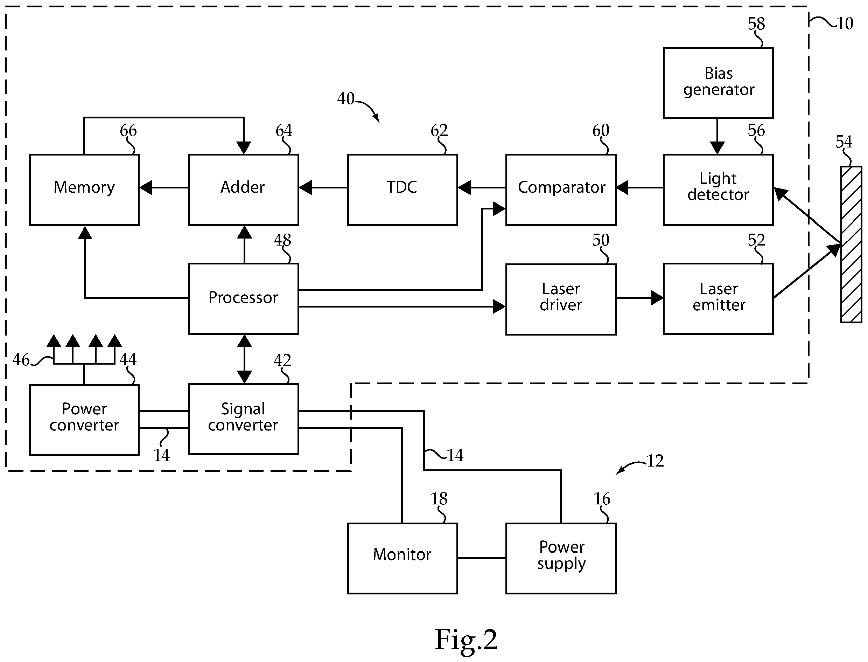

Turning to Figure 2, a block diagram is shown of a distance transmitter 10 for a loop powered circuit 12. Preferably, two wires 14 of a loop powered circuit 12 are connected to the transmitter 10. The loop powered circuit 12 includes at least a conventional power supply 16 and conventional industrial monitor 18. Although the input 20 is not shown in Figure 2, conventional wire connectors 20 can be provided as an input 20 between the power supply 16/monitor 18 and signal converter 42/power converter 44. The signal converter 42 and the monitor 18 exchange communication signals over the wires 14 of the current loop 12. One communication protocol that may be used is the highway addressable remote transducer (HART) protocol. The HART protocol is able to utilize the standard analog signal (i.e., to 20 mA) and can also overlay a digital signal which enables the exchange of additional information over the wires 14. Additional digital protocols that may be used include Foundation Fieldbus and Profibus. The power converter 44 draws electrical power from the wires 14 and converts the power into one or more voltages for use by the electrical components of the sensor 40. For the sake of clarity, the power output of the power converter 44 is shown as a power branch 46, although it is understood that power is supplied from the power converter 44 to each of the electrical components of the transmitter 10. Preferably, the signal converter 42 and the power converter 44 are located within the first housing 22 of the transmitter 10, while the remaining components of the sensor 40 described below are located in the second housing 24.

The sensor 40 is provided with a processor 48 that controls the electrical components in the sensor 40 (e.g., the laser driver 50, comparator 60, adder 64 and memory 66). As described further below, the sensor 40 determines the distance that a target 54 is from the transmitter 10 (i.e., the laser emitter 52 and the light detector 56). The signal converter 42 receives the distance from the processor 48 and converts the distance signal into an output signal that is compatible with the communication protocol of the two wire loop powered circuit 12. It is understood that while Figure 2 shows the electrical components as standalone devices, the components could also be multiple components that interact with each other or could be combined with the various components.

In order to obtain a distance measurement of the target 54, the processor 48 directs the laser driver 50 to pulse the laser emitter 52. If desired, a capacitor may be used to temporarily store power from the loop wires 14 to operate the laser emitter 52. That is, each time the capacitor is charged, the laser driver 50 pulses the laser emitter 52 using energy from the capacitor. However, even with the extra energy storage of a capacitor or other onboard energy storage, the laser emitter 52 will preferably have a duty cycle of less than 1%. The average power consumption of the laser emitter is also preferably less than 100 µW, but alternatively could be less than 1 mW. Preferably, a gallium nitride (GaN) field-effect transistor (FET) 50 is used for the laser driver 50 since the pulse that is generated with a GaN FET 50 rises more sharply than with conventional drivers. One type of GaN FET 50 that may be used is an EPC2007C made by Efficient Power Conversion Corporation (EPC). The laser emitter 52 then outputs a pulse of laser light that is directed out of the central opening 38 of the flange 30 and toward a target 54. The duration of each pulse may be about 1 ns. One type of laser emitter 52 that may be used is a pulsed semiconductor laser made by Excelitas Technologies with a wavelength of 905 nm. When the laser light hits the target 54, the light is reflected back toward the transmitter 10.

At least some of the reflected light passes back through the central opening 38 in the flange 30 and is received by the light detector 56. According to the invention, the light detector 56 is a single photon detector. Examples of single photon detectors may include Multi Pixel Photon Counters (MPPC), Single Photon Avalanche Diode (SPAD) arrays, and Silicon PhotoMultipliers (SiPM). One type of silicon photomultiplier that may be used is an M-series or C-Series fast silicon photomultiplier sensor made by SensL. A single photon detector is advantageous because it provides a high gain for the light detected while minimizing signal noise. This is particularly important in the described distance transmitter 10 because of the low power consumption requirement. For example, the laser emitter 52 operates on a charge of only between 10 A ns and 40 A ns. Thus, the reflected laser light can be considered relatively weak and would be difficult to pick up with a conventional light detector. The single photon detector preferably has an actual gain in use (as distinguished from advertised data based on optimized use) of at least 10⁴, and more preferably has a gain of between 10⁴ and 10⁶, although a gain of as much as 6×10⁶ may be possible. A bias generator 58 is provided to supply the light detector 56 with a bias voltage of between 15 V and 40 V.

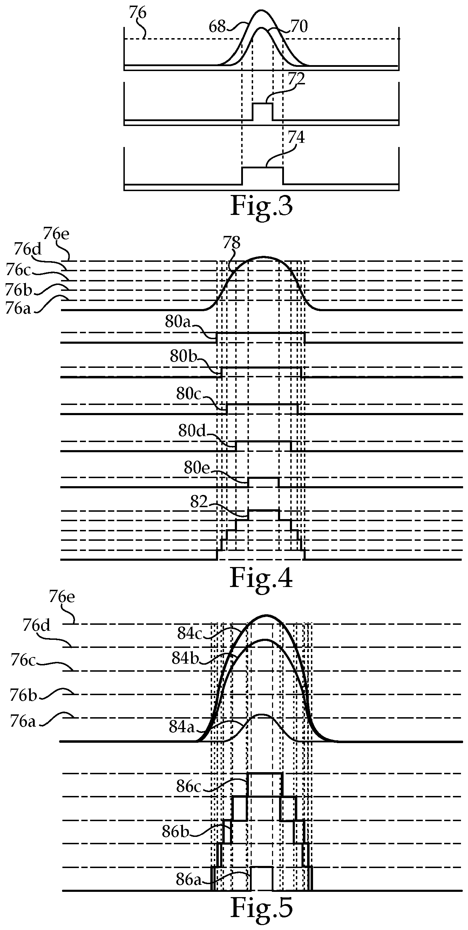

The light detector 56 outputs an analog signal that represents a laser light pulse to the voltage comparator 60. The voltage comparator 60 converts the analog signal to a digital signal to provide a discrete distinction between when the light detector 56 is detecting a pulse and when the light detector 56 is not detecting a pulse. The digital signal from the voltage comparator 60 is then used to calculate the time between when a laser pulse was output from the laser emitter 52 and when the reflected laser pulse was received by the light detector 56. However, as shown in Figure 3, the analog signal 68, 70 from the light detector 56 can vary in magnitude for different target distances and reflectivities. In the example of Figure 3, the larger pulse 68 and the smaller pulse 70 both represent a target 54 at the same distance but with different reflectivities. That is, the larger pulse 68 is larger because the target 54 was more reflective and reflected more light back to the light detector 56, whereas the smaller pulse 70 represents a target 54 that was less reflective and reflected less light back to the light detector 56. The digital output 72 of the voltage comparator 60 using the smaller pulse 70 is shown immediately below the analog signals 68, 70, and the digital output 74 of the voltage comparator 60 using the larger pulse 68 is shown at the bottom. As shown, when the analog signal 68, 70 is above the threshold voltage 76, the digital output 72, 74 indicates that a pulse has been received, and when the analog signal 68, 70 is below the threshold voltage 76, the digital output 72, 74 indicates that no pulse has been received. In this example, the threshold voltage 76 used by the voltage comparator 60 is fixed for both pulses. As shown, the larger pulse 68 crosses the threshold voltage 76 before the smaller pulse 70 so that the digital output 74 for the larger pulse 68 starts before the digital output 72 for the smaller pulse 70. This can create an undesirable inaccuracy in the distance measurement since the distance measurement relies upon a precise measurement of the time between the laser pulse being emitted and detected.

In order to overcome differences in pulse amplitudes from the light detector 56 due to different reflectivities of the target 54, the threshold voltage 76 of the voltage comparator 60 is adjusted over a series of pulses to compensate for different pulse amplitudes. For example, as shown in Figure 4, a series of analog laser pulses 78 like the one shown at the top can pass through the voltage comparator 60, and the threshold voltage 76a-e can be adjusted for each pulse 78. The digital output 80a-e of each pulse 78 with different threshold voltages 76a-e is shown for five pulses 80a-e below the analog signal 78. The individual outputs 80a-e can then be added together by the processor 48 to digitally reconstruct 82 the analog pulses 78 as shown at the bottom of Figure 4. Although the threshold 76 adjustments can be linear as shown, it may be preferable to adjust the threshold 76 exponentially. For example, the threshold voltage 76 can be adjusted according to X³, where X is incremented for each pulse or a factor thereof. As shown, in Figure 5, analog pulses 84a-c with different magnitudes can thus be represented digitally 86a-c as shown under the analog signals 84a-c. Using the digital reconstructions 86a-c, the processor 48 can then be used to determine the timing of the pulses while compensating for different amplitudes. Since the rising edge of the laser driver 50 is used to determine when the laser pulses are emitted, it is desirable to use the rising edge of the reflected pulse to determine when the laser pulses are received. Preferably, the processor 48 uses a function related to the height of the digitally reconstructed pulses 86a-c to determine the corrected rising edge of the pulses. For example, the time that the reflected laser pulses are received could be determined by multiplying the actual time of receipt by the height of the digital pulses 86a-c and by a constant and adding the height of the digital pulse 86a-c multiplied by a constant. Other techniques, such as a center of mass calculation or filtering, could also be used.

The time-to-digital converter (TDC) 62 then determines the time between the rising edge of pulses as they are output from the laser emitter 52 and received by the light detector 56. The time is further converted to a distance of the target 54 from the laser emitter 52 and the light detector 56. In order to determine the time between pulses, the processor 48 and TDC 62 will typically use an adder 64 and memory 66. In order to minimize the power consumption of the sensor 40, it may be possible to reduce the number of laser pulses that are needed to make each distance determination. For example, it may be desirable to determine the distance of the target 54 with 500 laser pulses or fewer. As described above, after the sensor 40 determines the distance of the target 54 from the laser emitter 52 and the light detector 56, the distance is output to the signal converter 42, which then outputs a signal representing the distance that is compatible with the loop powered circuit 12. For example, the output signal could be an analog signal where a current level of 4 mA represents a minimum distance and 20 mA represents a maximum distance, or vice versa, with current levels therebetween representing different distances between the minimum and maximum distances.

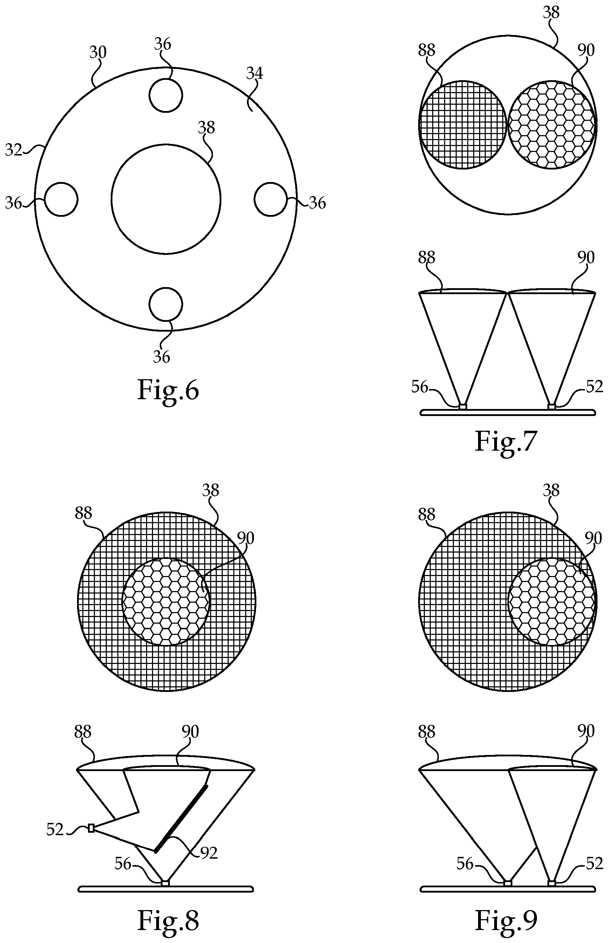

Turning to Figure 6-9, it has been described above that the transmitter 10 is also limited by the size of the central opening 38 and the amount of light that can be transmitted therethrough. A standard industrial NPS flange 30 is shown in Figure 6, which illustrates the central opening 38, outer circumference 32, mounting holes 36 and mounting surface 34. As noted, the central opening 38 is preferably a 2" standard opening 38. As shown in Figure 7, the lenses 88, 90 for the light detector 56 and the laser emitter 52 could be positioned side-by-side with the light detector 56 and laser emitter 52 laterally spaced from each other. However, as shown in this arrangement, a substantial portion of the central opening 38 is unused by the light detector 56 and laser emitter 52 and their respective lenses 88, 90. As shown in Figure 8, a single lens 88, 90 could be used to cover the entire central opening 38. An angled mirror 92 could then be positioned under the lens 88, 90, and the laser emitter 52 could be positioned at a corresponding angle so that the laser emitter 52 utilizes the central portion 90 of the lens 88, 90. The remaining annular portion 88 of the lens 88, 90 could then direct incoming light to the light detector 56. Although this arrangement utilizes the entire area of the central opening 38, the use of an angular mirror 92 and angular position of the laser emitter 52 makes this arrangement complicated and expensive.

As shown in Figure 9, another alternative is to provide the light detector 56 with one lens 88 that covers the entire central opening 38 (i.e., follows the circumference of the central opening 38), and provide the laser emitter 52 with a different lens 90 that is within the circumference of the light detector lens 88 but offset therefrom. Thus, as shown and described below, the laser emitter lens 90 is a second lens 90 that is an interruption 90 in the light detector lens 88. Advantageously, this arrangement allows the entire central opening 38 to be used to transmit light while not requiring an angled mirror 92 and angular position of the laser emitter 52.

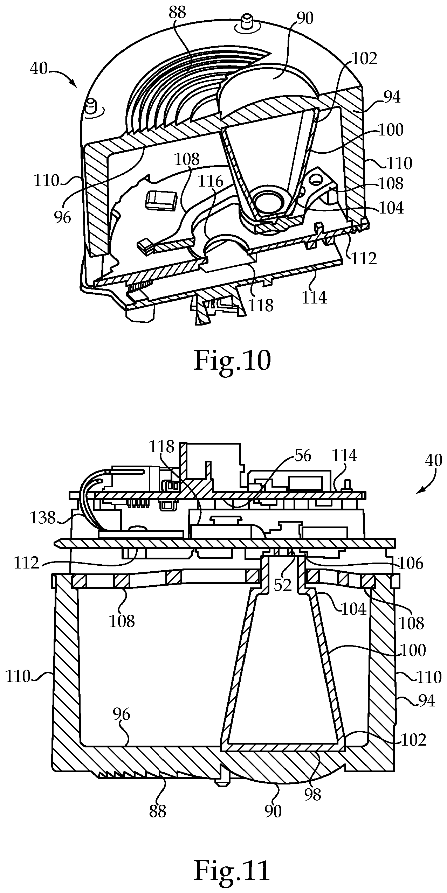

Turning to Figures 10-13, the sensor 40 is provided with a light detector lens 88 that is focused on the light detector 56 and transmits reflected laser pulse light to the light detector 56. Preferably, the light detector lens 88 is centrally positioned with respect to the central opening 38 of the flange 30 and covers the majority of the area of the central opening 38. As shown Figure 10, the light detector lens 88 may be on the outside surface of the lens body 94 facing away from the light detector 56. The light detector lens 88 may also be a convex Fresnel lens 88. The laser emitter lens 90 is focused on the laser emitter 52 and transmits laser pulse light from the laser emitter 52. Preferably, the laser emitter lens 90 is offset with respect to the light detector 56 and the light detector lens 88. The laser emitter lens 90 preferably covers a minority of the light detector lens 88. As shown in Figure 11, the laser emitter lens 90 may be a convex smoothly curved lens surface 90 on the outside surface of the lens body 94.

As shown in Figure 11, the inside surface of the lens body 94 facing the light detector 56 and laser emitter 52 is preferably flat without a lens surface. The inside surface may also have one flat surface 96 corresponding to the light detector lens 88 and a different flat surface 98 for the laser emitter lens 90. For example, as illustrated, the flat surface 98 of the laser emitter lens 90 may be a stepped-in recess relative to the light detector lens flat surface 96. The recessed flat surface 98 of the laser emitter lens 90 may provide a mounting surface for a shroud 100 that extends between the laser emitter 52 and the laser emitter lens 90. Thus, as shown in Figure 11, the enlarged end 102 of the shroud 100 fits into the stepped recess 98 to mount the shroud 100 into the step 98 and adjacent the laser emitter lens 90. The smaller end 104 of the shroud 100 may be located close to the laser emitter 52 and a small gap 106 may be present between the smaller end 104 of the shroud 100 and the laser emitter 52. The smaller end 104 of the shroud 100 may also have lateral arms 108 that extend from the shroud 100 to the side wall 110 of the lens body 94. Arms 108 are anchored to the side wall 110 to secure the shroud 100 to the lens body 94. The shroud 100 is preferably cone-shaped and hollow.

The purpose of the shroud 100 is to separate the light from the laser emitter 52 from the reflected light being received by the light detector 56. That is, the laser emitter 52 outputs laser light which travels through the shroud 100 toward the laser emitter lens 90. After passing through the laser emitter lens 90, which collimates the laser light, the laser light contacts a target 54 and is reflected back from the target 54 to the sensor 40 (shown in Figure 2). At least some of the reflected laser light passes back through the light detector lens 88, which condenses the light and directs the light centrally toward the light detector 56. Thus, the shroud 100 ensures that the laser light passes through the laser emitter lens 90 and leaves the lens body 94 as it travels toward the target 54. Without the shroud 100, laser light from the laser emitter 90 would reflect within the lens body 94 and overwhelm the light detector 56, making it difficult or impossible for the light detector 56 to sense light that is reflected back from the target 54. Although there may be a small gap 106 between the smaller end 104 of the shroud 100 and the laser emitter 52, the small amount of laser light leakage that may occur at that end is unlikely to significantly impact the light detector 56. Even so, it is expected that some laser light will be reflected back toward the light detector 56 at each of the various interfaces of the optics system (e.g., the shroud 100 to lens body 94 interface). It is possible to use the internal reflections as a baseline to improve the accuracy of the distance determinations further. For example, the internal reflections could be treated as a distance determination of zero distance and any additional laser light received by the light detector 56 as representing a distance greater than zero.

Any type of material that prevents laser light from passing through the walls of the shroud 100 may be used, and preferably, an opaque plastic is used. Preferably, the lenses 88, 90 for the light detector 56 and the laser emitter 52 are integrally molded together with each other. Even more preferably, the side wall 110 extending from the lenses 88, 90 toward the light detector 56 and the laser emitter 52 is also integrally molded with the lenses 88, 90. The lens body 94 may be made of various materials that transmit light. For example, a Poly(methyl methacrylate) (PMMA) material may be used. As shown in Figure 11, the light detector 56 and the laser emitter 52 are mounted onto the opposite end of the sidewall 110 from the lenses 88, 90. The interior space of the lens body 94 and the interior space of the shroud 100 may be filled with ambient air if desired.

As shown in Figures 11-12, the light detector 56 and the laser emitter 52 may be mounted onto two separate circuit boards 112, 114. As described below, this is particularly advantageous for separately aligning the axes of the light detector 56 and the laser emitter 52 with their respective lenses 88, 90. Specifically, the laser emitter 52 may be mounted on the inside of the inner circuit board 112. The light detector 56 may be mounted on the inside of the outer circuit board 114. As shown in Figure 10, a hole 116 may be provided through the inner circuit board 112 to allow light to pass through the inner circuit board 112 to the light detector 56. The light detector 56 is thus aligned with the opening 116 to receive light through the opening 116. Preferably, a light filter 118 covers the opening 116 to only allow light with a frequency matching the laser light to pass to the light detector 56. Thus, the filter 118 prevents ambient light from being received by the light detector 56. For example, where the laser emitter 52 has a frequency of 500 nm to 1,550 nm, and more particularly 905 nm, the filter 118 is designed to allow light with a frequency of 870 nm to 940 nm to pass therethrough. As shown in Figure 11, the filter 118 may be mounted to the outside of the inner circuit board 112.

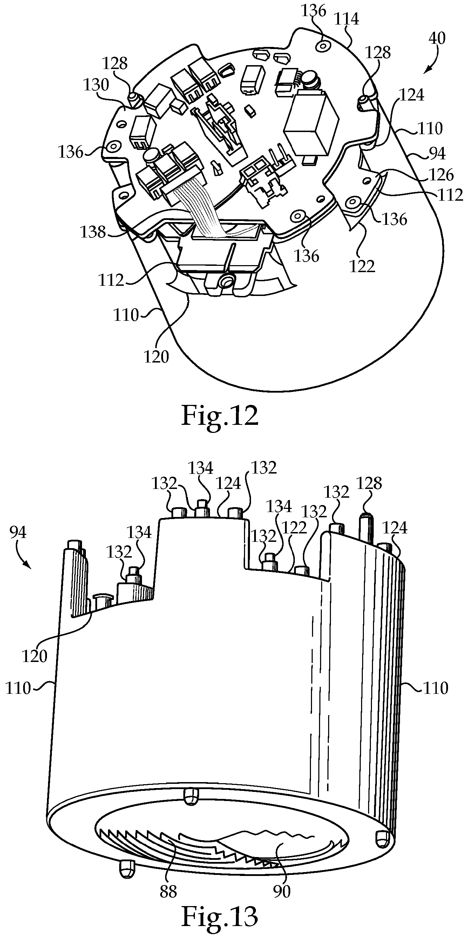

As shown in Figures 11-12, the circuit boards 112, 114 are preferably longitudinally separated from each other and are each separately mounted to the side wall 110 of the lens body 94. As shown in Figure 13, the sidewall 110 of the lens body 94 may be provided with stepped recesses 120, 122 and raised surfaces 124 along the end opposite from the lenses 88, 90. The lower stepped recess 120 may be used to receive and mount arms 108 of the shroud 100. The higher stepped recesses 122 may be used to receive and mount outwardly extending tabs 126 of the inner circuit board 112. The stepped recesses 122 serve to generally locate and retain the inner circuit board 112 during assembly and provide a longitudinally offset mounting surface relative to the outer circuit board 114. The raised surfaces 124 on opposite sides of the recesses 122 may be used to mount the outer circuit board 114. In order to generally locate and retain the outer circuit board 114 during assembly, the raised surfaces 124 may be provided with upwardly extending protrusions 128, and the outer circuit board 114 may be provided with loosely fitting slots 130 or holes 130.

As noted, the circuit boards 112, 114 may be separately mounted to the lens body 94 and aligned with the lenses 88, 90. For example, the inner circuit board 112 may be placed into the stepped recesses 122 and laterally positioned so that the laser emitter 52 is precisely aligned with the laser emitter lens 90. If desired, the inner circuit board 112 may rest on mounting pads 132. Some of the mounting pads 132 may be provided with upwardly extending pins 134. The pins 134 extend through openings 136 in the circuit board 112, but are oversized to allow the circuit board 112 to be laterally moved even with the pins 134 extending through the openings 136. In order to secure the circuit board 112 to the lens body 94, a UV cured adhesive may be applied to the interface between the pins 134 and the openings 136. After the inner board 112 has been laterally positioned to ensure alignment of the laser emitter 52 with the laser emitter lens 90, a UV light can be exposed to the pins 134 and openings 136 to cure the adhesive and secure the circuit board 112 to the side wall 110. After the inner circuit board 112 has been aligned and secured, a similar process can be used to align the light detector 56 with the light detector lens 88 and secure the outer circuit board 114 to the raised surfaces 124 of the lens body 94. Notably, the aligning and securing steps for the two circuit boards 112, 114 are done separately from each other so that the light detector 56 and laser emitter 52 can be separately aligned with their respective lenses 88, 90. The two circuit boards 112, 114 may be electrically connected together with a flexible cable 138 to allow the desired lateral adjustment between the circuit boards 112, 114 during assembly.

As described, distance transmitters 10 for loop powered systems 12 are constrained by the limited power consumption allowed and the size of the flange opening 38. However, the described distance transmitter 10 may operate on less than 30 mW of electrical power drawn from the loop wires 14 by the power converter 44. Alternatively, the transmitter 10 may operate on less than 150 mW or less than 800 mW in some arrangements. The distance transmitter 10 may also have a resolution of at least 2 cm for a distance of 30 m from a target 54 in an industrial process control setting. Thus, the described distance transmitter 10 overcomes conventional constraints and provides a distance transmitter 10 with improved performance. Although the preferred embodiment is envisioned as a loop powered distance transmitter 10 for 4-20 mA current loops, it is also possible that the distance transmitter 10 could be used in other industrial process control systems, such as 4-wire systems. Like the transmitter 10 described above, a transmitter 10 used in other control systems would be powered by an external power supply.

It should also be understood that the advantages described above are not necessarily the only advantages of the inventions, and it is not necessarily expected that all of the described advantages will be achieved with every embodiment of the inventions. As used herein, the term "coupled" is intended to include direct and indirect connections unless specifically limited. The term "structured" is intended to include electrical circuity designed to operate without the need for programmed instructions as well as non-transitory instructions executed by a programmable processor. The scope of the inventions is defined by the appended claims, and all devices and methods that come within the meaning of the claims, either literally or by equivalence, are intended to be embraced therein.

## Claims

1. A loop powered distance transmitter (10), comprising:
a laser emitter (52) structured to output laser light toward a target;
a light detector (56) structured to receive the laser light reflected from the target;
a processor (48) coupled to the light detector (56) and structured to output a first signal representing a distance of the target from the laser emitter (52) and the light detector (56);
a power converter (44) being coupled to the laser emitter (52), the light detector (56) and the processor (48), and the power converter (44) being structured to provide power to the laser emitter (52), the light detector (56) and the processor (48); and
a signal converter (42) coupled to the processor (48) and structured to receive the first signal from the processor (48), the signal converter (42) being structured to output a second signal to a two wire loop powered circuit (12), the second signal representing the distance of the target from the laser emitter (52) and the light detector (56), and the second signal being compatible with a communication protocol of the two wire loop powered circuit (12),
**characterized in that**
the light detector (56) comprises a single photon detector,
the power converter (44) is structured to receive electrical power from the two wire loop powered circuit (12), and
the distance transmitter (10) further comprises a voltage comparator (60) coupled between the light detector (56) and the processor (48), the voltage comparator (60) structured to output a first signal when a pulse is received from the light detector (56) and output a second signal when no pulse is received from the light detector (56), the voltage comparator (60) is configured to use a threshold voltage to distinguish between a pulse and no pulse, wherein the threshold voltage is adjusted over a series of pulses to compensate for pulses of different amplitudes in response to different reflectivities of different targets.

2. The loop powered distance transmitter according to claim 1, wherein the two wire loop powered circuit (12) is a 4-20 mA current loop.

3. The loop powered distance transmitter (10) according to claim 2, wherein the second signal is an analog signal, a current level of 4 mA representing one of a minimum or maximum distance and 20 mA representing the other of the minimum or maximum distance.

4. The loop powered distance transmitter (10) according to claim 1,
wherein the communication protocol of the two wire loop powered circuit (12) is a highway addressable remote transducer, HART, protocol, Foundation Fieldbus or Profibus; or
wherein the distance transmitter (10) is adapted to be mounted to a standard industrial flange with a 0.0508 m opening.

5. The loop powered distance transmitter (10) according to claim 1, wherein the single photon detector is a silicon photomultiplier, and the silicon photomultiplier has a gain of at least 10⁴ in actual use.

6. The loop powered distance transmitter (10) according to claim 1,
wherein the processor (48) uses a time-to-digital converter, TDC, to determine time between the laser light being output from the laser emitter (52) and the laser light being received by the light detector (56); or
wherein the laser emitter (52) has a duty cycle of less than 1%.

7. The loop powered distance transmitter (10) according to claim 1, wherein the laser is driven by a gallium nitride, GaN, field-effect transistor, FET.

8. The loop powered distance transmitter (10) according to claim 5, wherein the silicon photomultiplier operates on a bias voltage of between 15 V and 40 V.

9. The loop powered distance transmitter (10) according to claim 1,
wherein an average power consumption of the laser emitter (52) is less than 1 mW; or
wherein the electrical power received by the power converter (44) to operate the distance transmitter (10) is less than 150 mW.

10. The loop powered distance transmitter (10) according to claim 1, wherein a series of pulses are output by the laser emitter (52) and received by the light detector (56) for each determination of the distance of the target, the series of pulses being 500 or fewer pulses.

11. The loop powered distance transmitter (10) according to claim 1, wherein the distance transmitter (10) has a resolution of at least 2 cm where the distance of the target is 30 m for industrial process control.

12. The loop powered distance transmitter (10) according to claim 1, further comprising a first lens (88) structured and disposed to collimate and transmit the laser light output from the laser emitter (52), and a second lens (90) structured and disposed to focus and transmit the reflected laser light to the light detector (56), wherein the first lens (88) comprises an interruption within the circumference of the second lens (90).

13. The loop powered distance transmitter (10) according to claim 1, wherein the two wire loop powered circuit (12) is a 4-20 mA current loop, the single photon detector has a gain of at least 10⁴ in actual use, and a series of pulses are output by the laser emitter (52) and received by the light detector (56) for each determination of the distance of the target, the series of pulses being 500 or fewer pulses.

14. The loop powered distance transmitter (10) according to claim 10, wherein the single photon detector operates on a bias voltage of between 15 V and 40 V, the electrical power received by the power converter (44) to operate the distance transmitter (10) is less than 150 mW, the distance transmitter (10) is adapted to be mounted to a standard industrial flange with a 0.0508 m opening, and an average power consumption of the laser emitter (52) is less than 1 mW and the laser emitter (52) has a duty cycle of less than 1%.

15. The loop powered distance transmitter (10) according to claim 12, wherein single photon detector is a silicon photomultiplier, the processor (48) uses a time-to-digital converter, TDC, to determine time between the laser light being output from the laser emitter (52) and the laser light being received by the light detector (56), the laser is driven by a gallium nitride, GaN, field-effect transistor, FET, and the distance transmitter (10) has a resolution of at least 2 cm where the distance of the target is 30 m for industrial process control, wherein the communication protocol of the two wire loop powered circuit (12) is a highway addressable remote transducer, HART, protocol, Foundation Fieldbus or Profibus.

## Patentansprüche

1. Schleifengespeister Abstandssender (10), umfassend:
einen Laserstrahler (52), der strukturiert ist, um Laserlicht auf ein Ziel auszugeben;
einen Lichtdetektor (56), der strukturiert ist, um das vom Ziel reflektierte Laserlicht zu empfangen;
einen Prozessor (48), der mit dem Lichtdetektor (56) gekoppelt und strukturiert ist, um ein erstes Signal auszugeben, das einen Abstand des Ziels von dem Lasersender (52) und dem Lichtdetektor (56) repräsentiert; einen Leistungswandler (44), der mit dem Laserstrahler (52), dem Lichtdetektor (56) und dem Prozessor (48) gekoppelt ist, wobei der Leistungswandler (44) strukturiert ist, um Leistung für den Laserstrahler (52), den Lichtdetektor (56) und den Prozessor (48) bereitzustellen; und
einen Signalwandler (42), der mit dem Prozessor (48) gekoppelt und strukturiert ist, um das erste Signal von dem Prozessor (48) zu empfangen, wobei der Signalwandler (42) strukturiert ist, um ein zweites Signal an eine mit einer Zweidrahtschleife betriebene Schaltung (12) auszugeben, wobei das zweite Signal den Abstand des Ziels von dem Laserstrahler (52) und dem Lichtdetektor (56) repräsentiert, und das zweite Signal mit einem Kommunikationsprotokoll der mit einer Zweidrahtschleife gespeisten Schaltung (12) kompatibel ist,
**dadurch gekennzeichnet, dass**
der Lichtdetektor (56) einen Einzelphotonendetektor umfasst,
der Leistungswandler (44) strukturiert ist, um elektrische Leistung von der durch die Zweileiterschleife gespeisten Schaltung (12) zu empfangen, und
der Abstandssender (10) ferner einen Spannungskomparator (60) umfasst, der zwischen dem Lichtdetektor (56) und dem Prozessor (48) gekoppelt ist, wobei der Spannungskomparator (60) strukturiert ist, um ein erstes Signal auszugeben, wenn ein Impuls von dem Lichtdetektor (56) empfangen wird, und ein zweites Signal auszugeben, wenn kein Impuls von dem Lichtdetektor (56) empfangen wird, wobei der Spannungskomparator (60) dazu ausgelegt ist, eine Schwellenspannung zu verwenden, um zwischen einem Impuls und keinem Impuls zu unterscheiden, wobei die Schwellenspannung über eine Reihe von Impulsen angepasst wird, um Impulse mit unterschiedlichen Amplituden als Reaktion auf unterschiedliche Reflexionsgrade unterschiedlicher Ziele zu kompensieren.

2. Schleifengespeister Abstandssender nach Anspruch 1, wobei die durch die Zweileiterschleife gespeiste Schaltung (12) eine 4-20-mA-Stromschleife ist.

3. Schleifengespeister Abstandssender (10) nach Anspruch 2, wobei das zweite Signal ein analoges Signal ist, wobei ein Strompegel von 4 mA entweder einen minimalen oder maximalen Abstand repräsentiert und 20 mA den jeweiligen anderen minimalen oder maximalen Abstand repräsentiert.

4. Schleifengespeister Abstandssender (10) nach Anspruch 1,
wobei das Kommunikationsprotokoll der durch die Zweidrahtschleife gespeisten Schaltung (12) ein "Highway Addressable Remote Transducer", HART-Protokoll, Foundation Fieldbus oder Profibus ist; oder
wobei der Abstandssender (10) zur Montage an einen Standard-Industrieflansch mit einer Öffnung von 0,0508 m angepasst ist.

5. Schleifengespeister Abstandssender (10) nach Anspruch 1, wobei der Einzelphotonendetektor ein Silizium-Photovervielfacher ist und der Silizium-Photovervielfacher im tatsächlichen Gebrauch eine Verstärkung von mindestens 10⁴ aufweist.

6. Schleifengespeister Abstandssender (10) nach Anspruch 1,
wobei der Prozessor (48) einen Zeit-Digital-Wandler, TDC, verwendet, um die Zeit zwischen dem Laserlicht, das von dem Lasersender (52) ausgegeben wird, und dem Laserlicht, das von dem Lichtdetektor (56) empfangen wird, zu bestimmen; oder
wobei der Lasersender (52) ein Tastverhältnis von weniger als 1 % aufweist.

7. Schleifengespeister Abstandssender (10) nach Anspruch 1, wobei der Laser von einem Galliumnitrid-Feldeffekttransistor, GaN-FET, angesteuert wird.

8. Schleifengespeister Abstandssender (10) nach Anspruch 5, wobei der Silizium-Photovervielfacher mit einer Vorspannung zwischen 15 V und 40 V arbeitet.

9. Schleifengespeister Abstandssender (10) nach Anspruch 1,
wobei eine durchschnittliche Leistungsaufnahme des Lasersenders (52) weniger als 1 mW beträgt; oder
wobei die vom Leistungswandler (44) empfangene elektrische Leistung zum Betreiben des Abstandssenders (10) weniger als 150 mW beträgt.

10. Schleifengespeister Abstandssender (10) nach Anspruch 1, wobei für jede Bestimmung des Abstands des Ziels eine Reihe von Impulsen vom Lasersender (52) ausgegeben und vom Lichtdetektor (56) empfangen wird, wobei die Reihe von Impulsen 500 oder weniger Impulse beträgt.

11. Schleifengespeister Abstandssender (10) nach Anspruch 1, wobei der Abstandssender (10) eine Auflösung von mindestens 2 cm hat, wenn der Abstand des Ziels für die industrielle Prozesssteuerung 30 m beträgt.

12. Schleifengespeister Abstandssender (10) nach Anspruch 1, ferner umfassend eine erste Linse (88), die strukturiert und angeordnet ist, um das von dem Lasersender (52) ausgegebene Laserlicht zu kollimieren und zu übertragen, und eine zweite Linse (90), die strukturiert und angeordnet ist, um das reflektierte Laserlicht zu fokussieren und an den Lichtdetektor (56) zu übertragen, wobei die erste Linse (88) eine Unterbrechung innerhalb des Umfangs der zweiten Linse (90) umfasst.

13. Schleifengespeister Abstandssender (10) nach Anspruch 1, wobei die durch die Zweileiterschleife gespeiste Schaltung (12) eine 4-20 mA-Stromschleife ist, der Einzelphotonendetektor bei tatsächlicher Verwendung eine Verstärkung von mindestens 10⁴ aufweist und eine Reihe von Impulsen von dem Lasersender (52) ausgegeben und von dem Lichtdetektor (56) für jede Bestimmung des Abstands des Ziels empfangen wird, wobei die Reihe von Impulsen 500 oder weniger Impulse beträgt.

14. Schleifengespeister Abstandssender (10) nach Anspruch 10, wobei der Einzelphotonendetektor mit einer Vorspannung zwischen 15 V und 40 V arbeitet, die vom Leistungswandler (44) empfangene elektrische Leistung zum Betreiben des Abstandssenders (10) weniger als 150 mW beträgt, der Abstandssender (10) so angepasst ist, dass er an einem Standard-Industrieflansch mit einer Öffnung von 0,0508 m montiert werden kann, und eine durchschnittliche Leistungsaufnahme des Lasersenders (52) weniger als 1 mW beträgt und der Laseremitter (52) ein Tastverhältnis von weniger als 1 % aufweist.

15. Schleifengespeister Abstandssender (10) nach Anspruch 12, wobei der Einzelphotonendetektor ein Silizium-Photovervielfacher ist, der Prozessor (48) einen Zeit-Digital-Wandler, TDC, verwendet, um die Zeit zwischen dem Laserlicht, das von dem Lasersender (52) ausgegeben wird, und dem Laserlicht, das von dem Lichtdetektor (56) empfangen wird, zu bestimmen, der Laser durch einen Galliumnitrid-Feldeffekttransistor, GaN-FET, angesteuert wird, und der Abstandssender (10) eine Auflösung von mindestens 2 cm hat, wobei der Abstand des Ziels für die industrielle Prozesssteuerung 30 m beträgt, wobei das Kommunikationsprotokoll des durch die Zweileiterschleife gespeisten Schaltung (12) ein "Highway Addressable Remote Transducer", HART-Protokoll, Foundation Fieldbus oder Profibus ist.

## Revendications

1. Transmetteur (10) de distance alimenté en boucle, comportant :
un émetteur laser (52) structuré pour délivrer une lumière laser vers une cible ;
un détecteur (56) de lumière structuré pour recevoir la lumière laser réfléchie depuis la cible ;
un processeur (48) couplé au détecteur (56) de lumière et structuré pour délivrer un premier signal représentant une distance de la cible à l'émetteur laser (52) et au détecteur (56) de lumière ;
un convertisseur (44) de puissance qui est couplé à l'émetteur laser (52), au détecteur (56) de lumière et au processeur (48), et le convertisseur (44) de puissance étant structuré pour fournir une alimentation à l'émetteur laser (52), au détecteur (56) de lumière et au processeur (48) ; et
un convertisseur (42) de signal couplé au processeur (48) et structuré pour recevoir le premier signal en provenance du processeur (48), le convertisseur (42) de signal étant structuré pour délivrer un second signal à un circuit bifilaire (12) alimenté en boucle, le second signal représentant la distance de la cible à l'émetteur laser (52) et au détecteur (56) de lumière, et le second signal étant compatible avec un protocole de communication du circuit bifilaire (12) alimenté en boucle,
**caractérisé en ce que**
le détecteur (56) de lumière comporte un unique détecteur de photons,
le convertisseur (44) de puissance est structuré pour recevoir une alimentation électrique en provenance du circuit bifilaire (12) alimenté en boucle, et
le transmetteur (10) de distance comporte en outre un comparateur (60) de tension couplé entre le détecteur (56) de lumière et le processeur (48), le comparateur (60) de tension étant structuré pour délivrer un premier signal lorsqu'une impulsion est reçue en provenance du détecteur (56) de lumière et délivrer un second signal lorsqu'aucune impulsion n'est reçue en provenance du détecteur (56) de lumière, le comparateur (60) de tension étant configuré pour utiliser une tension seuil pour distinguer entre une impulsion et une absence d'impulsion, la tension seuil étant ajustée au fil d'une série d'impulsions pour compenser l'effet d'impulsions d'amplitudes différentes en réponse à des réflectivités différentes de cibles différentes.

2. Transmetteur de distance alimenté en boucle selon la revendication 1, le circuit bifilaire (12) alimenté en boucle étant une boucle de courant de 4-20 mA.

3. Transmetteur (10) de distance alimenté en boucle selon la revendication 2, le second signal étant un signal analogique, un niveau de courant de 4 mA représentant une distance parmi des distances minimum et maximum et 20 mA représentant l'autre distance parmi les distances minimum et maximum.

4. Transmetteur (10) de distance alimenté en boucle selon la revendication 1,
le protocole de communication du circuit bifilaire (12) alimenté en boucle étant un protocole de transducteur déporté adressable par bus, HART, Foundation Fieldbus ou Profibus ; ou
le transmetteur (10) de distance étant prévu pour être monté sur une bride industrielle standard dotée d'une ouverture de 0,0508 m.

5. Transmetteur (10) de distance alimenté en boucle selon la revendication 1, l'unique détecteur de photons étant un photomultiplicateur au silicium, et le photomultiplicateur au silicium présentant un gain d'au moins 10⁴ en utilisation réelle.

6. Transmetteur (10) de distance alimenté en boucle selon la revendication 1,
le processeur (48) utilisant un convertisseur temps-numérique, TDC, pour déterminer un temps entre l'émission de la lumière laser à partir de l'émetteur laser (52) et la réception de la lumière laser par le détecteur (56) de lumière ; ou
l'émetteur laser (52) présentant un cycle de service de moins de 1%.

7. Transmetteur (10) de distance alimenté en boucle selon la revendication 1, le laser étant excité par un transistor à effet de champ, FET, au nitrure de gallium, GaN.

8. Transmetteur (10) de distance alimenté en boucle selon la revendication 5, le photomultiplicateur au silicium fonctionnant sur une tension de polarisation comprise entre 15 V et 40 V.

9. Transmetteur (10) de distance alimenté en boucle selon la revendication 1,
une consommation énergétique moyenne de l'émetteur laser (52) étant inférieure à 1 mW ; ou
la puissance électrique reçue par le convertisseur (44) de puissance pour faire fonctionner le transmetteur (10) de distance étant inférieure à 150 mW.

10. Transmetteur (10) de distance alimenté en boucle selon la revendication 1, une série d'impulsions étant délivrée par l'émetteur laser (52) et reçue par le détecteur (56) de lumière pour chaque détermination de la distance de la cible, la série d'impulsions comprenant 500 impulsions ou moins.

11. Transmetteur (10) de distance alimenté en boucle selon la revendication 1, le transmetteur (10) de distance présentant une résolution d'au moins 2 cm lorsque la distance de la cible est de 30 m pour la commande des processus industriels.

12. Transmetteur (10) de distance alimenté en boucle selon la revendication 1, comportant en outre une première lentille (88) structurée et disposée pour collimater et transmettre la lumière laser délivrée à partir de l'émetteur laser (52), et une seconde lentille (90) structurée et disposée pour concentrer et transmettre la lumière laser réfléchie vers le détecteur (56) de lumière, la première lentille (88) constituant une interruption au sein de la circonférence de la seconde lentille (90).

13. Transmetteur (10) de distance alimenté en boucle selon la revendication 1, le circuit bifilaire (12) alimenté en boucle étant une boucle de courant de 4-20 mA, l'unique détecteur de photons présentant un gain d'au moins 10⁴ en utilisation réelle, et une série d'impulsions étant délivrée par l'émetteur laser (52) et reçue par le détecteur (56) de lumière pour chaque détermination de la distance de la cible, la série d'impulsions comprenant 500 impulsions ou moins.

14. Transmetteur (10) de distance alimenté en boucle selon la revendication 10, l'unique détecteur de photons fonctionnant sur une tension de polarisation comprise entre 15 V et 40 V, la puissance électrique reçue par le convertisseur (44) de puissance pour faire fonctionner le transmetteur (10) de distance étant inférieure à 150 mW, le transmetteur (10) de distance étant prévu pour être monté sur une bride industrielle standard dotée d'une ouverture de 0,0508 m, et une consommation énergétique moyenne de l'émetteur laser (52) étant inférieure à 1 mW et l'émetteur laser (52) présentant un cycle de service de moins de 1%.

15. Transmetteur (10) de distance alimenté en boucle selon la revendication 12, l'unique détecteur de photons étant un photomultiplicateur au silicium, le processeur (48) utilisant un convertisseur temps-numérique, TDC, pour déterminer un temps entre l'émission de la lumière laser à partir de l'émetteur laser (52) et la réception de la lumière laser par le détecteur (56) de lumière, le laser étant excité par un transistor à effet de champ, FET, au nitrure de gallium, GaN, et le transmetteur (10) de distance présentant une résolution d'au moins 2 cm lorsque la distance de la cible est de 30 m pour la commande des processus industriels, le protocole de communication du circuit bifilaire (12) alimenté en boucle étant un protocole de transducteur déporté adressable par bus, HART, Foundation Fieldbus ou Profibus.
